# EUROPEAN PATENT APPLICATION

(11) **EP 3 499 060 A1**
(43) Date of publication of application: **19.06.2019**
(21) Application number: 18209435.9
(22) Date of filing: 30.11.2018
(51) Int. Cl.: F16C 17/02, F16C 33/12, F16C 33/14

(54) **SLIDING MEMBER AND BEARING**

(30) Priority: 15.12.2017 JP 2017241147
(71) Applicant: Senju Metal Industry Co., Ltd, Tokyo 120-8555 (JP)
(72) Inventor: KUROSAKI, Kimihiko, Tokyo, 120-8555 (JP); TADOKORO, Kenzo, Tokyo, 120-8555 (JP); TOYODA, Minoru, Tokyo, 120-8555 (JP)
(74) Representative: Grünecker Patent- und Rechtsanwälte PartG mbB

(57) **Abstract**

Provided are a sliding member (1) and a bearing (7) using the sliding member. The sliding member (1) contains a metallic substrate (2), a porous layer (3) formed on a surface of the metallic substrate (1) and a sliding layer (5) covered on the porous layer (3) . The sliding layer (5) is made of a lead-free resin composition (4) . The lead-free resin composition (4) includes a pitch-based carbon fiber, a fluorocarbon resin and any of or a combination of two or more of aramid fiber, iron oxide, molybdenum disulfide, graphite, and zinc, zinc alloy or zinc compound. 0.5 weight % or more and 17 weight % or less of a pitch-based carbon fiber is included. A total addition amount of additives excluding the fluorocarbon resin is 25 volume % or less.

## Description

### Field of the Invention

The present invention relates to a sliding member slidably supporting a mated member and a bearing using the sliding member.

### Related Art

A sliding material having a so-called bimetal structure, namely, a two-layer structure in which Cu-based alloy powder is sintered on a steel plate as a back plate has been often used as a sliding member. In this case, a surface of a metal layer on which the Cu-based alloy powder is sintered becomes a sliding surface, so that such a sliding member has maintained its good slidability by containing lead (Pb) in the Cu-based alloy powder which has been used in the past.

On the other hand, use of Pb has been limited in various kinds of fields in recent years because of harmful effect to human health and a material without using Pb has been proposed in a sliding member. For example, Japanese Patent Application Publication No.S62-127227 discloses a sliding member using a resin material as a sliding member without using Pb.

Further, Japanese Patent Application Publication No.2010-159808 discloses a bearing which includes a past sliding member using the resin material and having a three-layer structure in which Cu-based alloy powder is sintered on a steel plate as a back plate so as to be porous and a resin composition in which an additive agent is mixed with a resin is impregnated to a porous layer and baked. In this case, a surface of the resin layer is a sliding surface. As the resin composition, taking a heat-resisting property into consideration, fluorocarbon resin such as polytetrafluoroethylene (PTFE) has been generally used. A sliding member into which such PTFE has been impregnated has been used in, for example, a sliding portion of a shock absorber or the like used in a vehicle or the like.

In the shock absorber embodied in the vehicle or the like, the sliding member is used in a guide bushing for guiding a piston rod to which a motion of a suspension mechanism that displaces following a variation of a road surface or the like is transferred to make a reciprocating motion.

The shock absorber damps vibration utilizing viscosity resistance of liquid therein against any input from outside. On the other hand, it has been determined that any friction force generated by the guide bushing which guides the reciprocating motion of the piston rod has an influence on ride quality of a vehicle or the like.

In other words, a relationship between a static friction force which acts when a static piston rod starts to move and a dynamic friction force which acts when a piston rod moves has an influence on ride quality of a vehicle or the like.

This invention addresses such an issue and has an object to provide a sliding member that enables the relationship between the static friction force and the dynamic friction force to be controlled and a bearing using the sliding member.

The inventors have found out that the static friction force becomes large and the relationship between the static friction force and the dynamic friction force is controlled when including a predetermined amount of pitch-based carbon fiber in a resin composition forming a sliding layer.

To achieve the above object, according to an aspect of the present invention, there is provided with a sliding member containing a lead-free resin composition wherein the lead-free resin composition includes a pitch-based carbon fiber, a fluorocarbon resin and any of or a combination of two or more of aramid fiber, iron oxide, molybdenum disulfide, graphite, and zinc, zinc alloy or zinc compound, wherein 0.5 weight % or more and 17 weight % or less of a pitch-based carbon fiber is included; more than 0 weight % and 14 weight % or less of the aramid fiber is included when the aramid fiber is added; more than 0 weight % and 37 weight % or less of the iron oxide is included when the iron oxide is added; more than 0 weight % and 20 weight % or less of the molybdenum disulfide is included when the molybdenum disulfide is added; more than 0 weight % and 10 weight % or less of the graphite is included when the graphite is added; more than 0 weight % and 40 weight % or less of the zinc, zinc alloy or zinc compound is included when the zinc, zinc alloy or zinc compound is added, assuming weight of the resin composition as 100, and the remainder is the fluorocarbon resin, and wherein a total addition amount of additives excluding the fluorocarbon resin is 25 volume % or less.

According to embodiments of the present invention, it is desired to provide a sliding member containing a metallic substrate, a porous layer formed on a surface of the metallic substrate, and a sliding layer covered on the porous layer, wherein the porous layer is made of a metal itself or alloy composition, wherein the sliding layer is made of a lead-free resin composition, wherein the lead-free resin composition includes a pitch-based carbon fiber, a fluorocarbon resin and any of or a combination of two or more of aramid fiber, iron oxide, molybdenum disulfide, graphite, and zinc, zinc alloy or zinc compound, wherein 0.5 weight % or more and 17 weight % or less of a pitch-based carbon fiber is included; more than 0 weight % and 14 weight % or less of the aramid fiber is included when the aramid fiber is added;
more than 0 weight % and 37 weight % or less of the iron oxide is included when the iron oxide is added; more than 0 weight % and 20 weight % or less of the molybdenum disulfide is included when the molybdenum disulfide is added; more than 0 weight % and 10 weight % or less of the graphite is included when the graphite is added; more than 0 weight % and 40 weight % or less of the zinc, zinc alloy or zinc compound is included when the zinc, zinc alloy or zinc compound is added, assuming weight of the resin composition as 100; and the remainder is the fluorocarbon resin, wherein a total addition amount of additives excluding the fluorocarbon resin is 25 volume % or less.

It is also desired to provide a sliding member wherein the pitch-based carbon fiber includes 5 µm or more and 20 µm or less of a fiber diameter, 10 µm or more and 150 µm or less of a fiber length and 2 or more and 20 or less of an aspect ratio.

It is further desired to provide a sliding member wherein the fluorocarbon resin is polytetrafluoroethylene.

According to another aspect of the present invention, there is provided with a bearing containing a metallic substrate, a porous layer formed on a surface of the metallic substrate, and a sliding layer covered on the porous layer, the sliding layer being a cylindrical internal circumference and innermost layer, wherein the porous layer is made of a metal itself or alloy composition, wherein the sliding layer is made of a lead-free resin composition, wherein the lead-free resin composition includes a pitch-based carbon fiber, a fluorocarbon resin and any of or a combination of two or more of aramid fiber, iron oxide, molybdenum disulfide, graphite, and zinc, zinc alloy or zinc compound, wherein 0.5 weight % or more and 17 weight % or less of a pitch-based carbon fiber is included; more than 0 weight % and 14 weight % or less of the aramid fiber is included when the aramid fiber is added; more than 0 weight % and 37 weight % or less of the iron oxide is included when the iron oxide is added; more than 0 weight % and 20 weight % or less of the molybdenum disulfide is included when the molybdenum disulfide is added; more than 0 weight % and 10 weight % or less of the graphite is included when the graphite is added; more than 0 weight % and 40 weight % or less of the zinc, zinc alloy or zinc compound is included when the zinc, zinc alloy or zinc compound is added, assuming weight of the resin composition as 100, and the remainder is the fluorocarbon resin, wherein a total addition amount of additives excluding the fluorocarbon resin is 25 volume % or less.

According to this invention, it is possible to make the static friction force large, control a rate of change of the dynamic friction force to the static friction force to be limited and prevent any abrasion, by including a predetermined amount of pitch-based carbon fiber in the resin composition. Accordingly, when the sliding member of this invention is applied to a shock absorber, it is possible to improve the ride quality of a vehicle or the like.

Other objects and attainments of the present invention will be become apparent to those skilled in the art upon a reading of the following detailed description when taken in conjunction with the drawings.

### Brief Description of the Drawings

FIG. 1 is a sectional diagram showing a configuration example of a sliding member according to an embodiment of the invention.
FIG. 2 is a perspective view of a bearing showing a configuration example thereof according to an embodiment of the invention.
FIG. 3 is a sectional view of the bearing showing the configuration example thereof according to the embodiment of the invention.
FIG. 4 is a graph showing a relationship between a static friction force and a dynamic friction force.
FIG. 5 is a diagram showing a configuration example of a testing machine for measuring the static friction force and the dynamic friction force.

### Description of the Preferred Embodiments

The following will describe a sliding member of the invention and a bearing to which the sliding member of the invention is applied as preferred embodiments of this invention more in detail with reference to the drawings.

### <Configuration Example of Sliding Member according to Preferred Embodiment>

The sliding member according to the preferred embodiment contains a lead-free resin composition. The resin composition includes a pitch-based carbon fiber, a fluorocarbon resin and any of or a combination of two or more of aramid fiber, iron oxide, molybdenum disulfide, graphite, and zinc, zinc alloy or zinc compound.

The resin composition includes 0.5 weight % or more and 17 weight % or less of a pitch-based carbon fiber. More than 0 weight % and 14 weight % or less of the aramid fiber is included when the aramid fiber is added; more than 0 weight % and 37 weight % or less of the iron oxide is included when the iron oxide is added; more than 0 weight % and 20 weight % or less of the molybdenum disulfide is included when the molybdenum disulfide is added; more than 0 weight % and 10 weight % or less of the graphite is included when the graphite is added; more than 0 weight % and 40 weight % or less of the zinc, zinc alloy or zinc compound is included when the zinc, zinc alloy or zinc compound is added, assuming weight of the resin composition as 100, and the remainder is the fluorocarbon resin. A total addition amount of additives excluding the fluorocarbon resin is 25 volume % or less. The sliding member according to the preferred embodiment is used so as to cover a surface of a metallic substrate and cover a metallic porous layer formed on a surface of the metallic substrate.

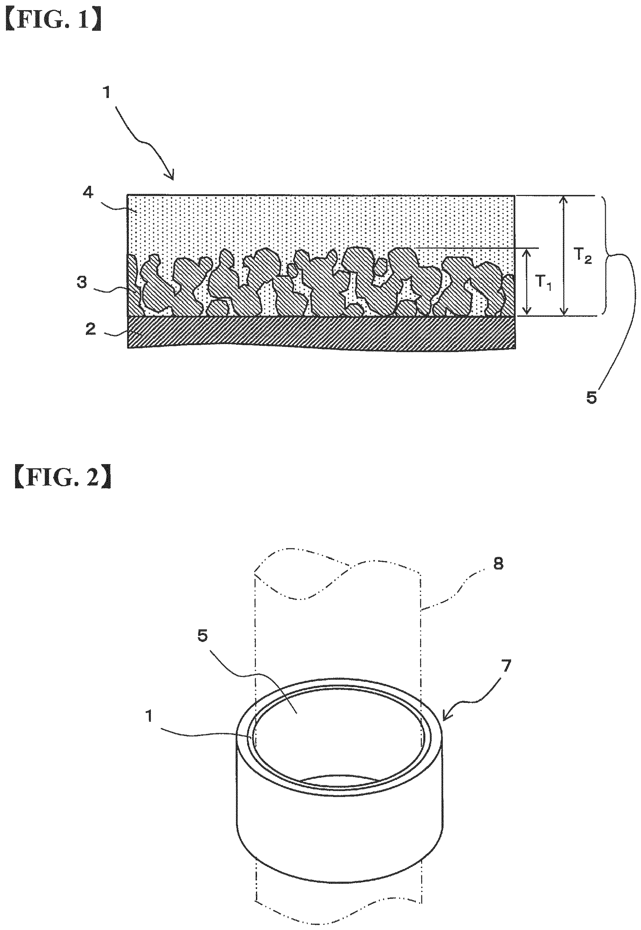

FIG. 1 shows an example of a sliding member according to a preferred embodiment of the invention. The sliding member 1 according to the preferred embodiment contains a metallic substrate 2, a porous layer 3 formed on a surface of the metallic substrate 2, the porous layer being made of a metal itself or an alloy composition, and a sliding layer 5 covered on the porous layer 3 by a resin composition 4.

The porous layer 3 is formed by sintering a metallic powder on a surface of the metallic substrate 2. In this embodiment, a copper plated steel plate in which copper (Cu) is plated on an iron (Fe) -based plate is used as the metallic substrate 2. As the metallic powder forming the porous layer 3, Cu itself or an alloy having a principal ingredient of Cu is used and a Cu-Sn alloy powder is used in this embodiment.

According to a manufacturing method of the porous layer 3, the Cu-Sn alloy powder is sprayed on the copper plated steel plate with a desired thickness thereof and the copper plated steel plate on which the Cu-Sn alloy powder is sprayed is sintered in a sintering furnace. This enables to be formed the porous layer 3 made of Cu-Sn based alloy with a desired thickness thereof on the copper plated steel plate.

The resin composition 4 is impregnated into the porous layer 3 with a predetermined thickness thereof and the resin composition 4 impregnated into the porous layer 3 is baked so that the sliding layer 5 is formed. In this embodiment, as the resin composition 4, resin and additives are mixed. As the resin, polytetrafluoroethylene (PTFE) is used as an example of fluorocarbon resin.

The resin composition 4 includes a pitch-based carbon fiber as an essential additive. As other optional additives, the resin composition 4 may include any of or a combination of two or more of aramid fiber, iron oxide, molybdenum disulfide, graphite, and zinc, zinc alloy or zinc compound.

According to a manufacturing method of the sliding layer 5, a predetermined amount of the resin composition 4 is supplied onto the porous layer 3 formed on the surface of the metallic substrate 2, and the resin composition 4 is pressed on the porous layer 3, so that the resin composition 4 is impregnated into the porous layer 3. The amount of the resin composition 4 supplied onto the porous layer 3 is an amount of the resin composition 4 which is covered on the porous layer 3 with a thickness such that the porous layer 3 is not exposed from a surface of the sliding layer 5 after the resin composition 4 is baked, which will be described later.

When heating the resin composition 4 at a temperature which exceeds a melting point of a resin included in the resin composition 4, the resin is melted and an organic solvent is volatilized and then, the resin is hardened and the sliding layer 5 is formed. The sliding layer 5 is baked using the baking furnace in this embodiment by heating the resin composition 4 at a temperature which exceeds a melting point of polytetrafluoroethylene. Here, the term, "bake" is referred to as "heating the resin composition 4 at a predetermined temperature to form the sliding layer 5" . The melting point of polytetrafluoroethylene used as the resin is 327 degrees C.

In the sliding member 1 of this embodiment, all of the metallic powder for forming the porous layer 3 may have a diameter within a range of about 15 through 180 µm, preferably about 25 through 150 µm. In addition, in the sliding member 1, a thickness T1 of the porous layer 3 formed by using a metallic powder having such a diameter may be set so as to be about 0.06 through 0.35 mm. The thickness of the porous layer 3 is a thickness such that at least two pieces of the metallic powder are laid in piles and sintered.

Further, in the sliding member 1, a thickness T2 of the sliding layer 5 may be set to be about 0.08 through 0.43 mm. Here, the thickness T2 of the sliding layer 5 is referred to as "a thickness of the sliding layer 5 from a surface of the metallic substrate 2" . The thickness of the sliding layer 5 is set to be averagely thicker than the thickness of the porous layer 3 so that the porous layer 3 cannot be exposed. In this embodiment, the thickness T2 of the sliding layer 5 is set to be 0.3 mm.

### < Configuration Example of Bearing according to Preferred Embodiment>

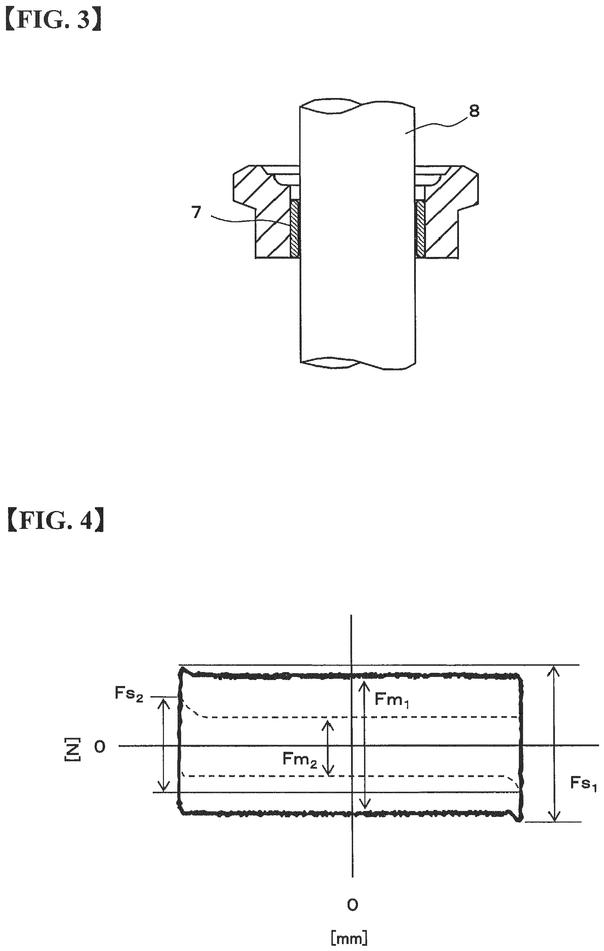

FIG. 2 and 3 show a configuration example of a bearing according to an embodiment of the invention in which the sliding member 1 according to the embodiment of the invention is used.

The bearing 7 according to an embodiment of the invention is configured so that the sliding member 1 described on FIG. 1 is annularly formed with the sliding layer 5 being inwardly arranged. The bearing 7 supports a rod 8 as a mated member with the cylindrical sliding layer 5 forming an internal circumference. The bearing 7 is configured so that the rod 8 is slid under a linear motion.

The bearing 7 according to an embodiment of the invention is used for a vibration damping apparatus such as a shock absorber used for a vehicle or the like and is used as a sliding portion of a guide bushing for guiding a piston rod which reciprocates, in the shock absorber, with a motion of a suspension mechanism varied following a variation of a road surface or the like being transferred to the sliding portion.

In the sliding member 1, the rod 8 which is a piston rod is a mated member and the resin composition 4 forming the sliding layer 5 contacts the mated member directly or via a fluid such as oil. In the mated member of the sliding member 1, a surface thereof made of a stainless steel or Fe is configured to be covered with Cr (chromium) or Ti (titanium) by means of a method such as a plating method. The mated member of the sliding member 1 may be mode of Cr, Ti themselves or their alloy.

FIG. 4 shows a relationship between a static friction force and a dynamic friction force. In the FIG. 4, a vertical axis indicates friction force (N) and a horizontal axis indicates a stroke (mm) . In the shock absorber used for the vehicle or the like, the piston rod reciprocates based on that the suspension follows the variations or the like of the road surface. Based on a fact such that the piston rod reciprocates, there is a state where the piston rod stands still.

Accordingly, in the guide bushing used for the shock absorber, when the rate of change in a dynamic friction force Fm2 in relation to a static friction force Fs2 is large, as shown in broken lines of FIG. 4, it is felt uncomfortable to ride in the vehicle or the like. When the static friction force Fs2 is small, it is also felt uncomfortable to ride in the vehicle or the like. As opposed to them, when the static friction force Fs2 is large and the rate of change in a dynamic friction force Fm2 in relation to a static friction force Fs2 is small, it is improved to be more comfortable to ride in the vehicle or the like.

Therefore, in the sliding member 1 used as the bearing 7 constituting the guide bushing, a pitch-based carbon fiber is added into the resin composition 4 forming the sliding layer 5 which contacts the rod 8 as the piston rod and guides the reciprocating motion of the piston rod in this invention. The following will describe the resin composition 4 more in detail.

### [Fluorocarbon Resin]

The fluorocarbon resin which is a base resin of the resin composition 4 is a well-known synthetic resin having an excellent sliding characteristic to maintain a sufficient heat-resisting property for heat generated when any sliding friction occurs. Therefore, Polytetrafluoroethylene (PTFE) resin, Tetrafluoroetylene-Perfluoroalkylvinylether (PFA) copolymer, Tetrafluoroetylene-Hexafluoropropylen (FEP) copolymer, and Ethylene-TetraFluoroEthylene (ETFE) copolymer are often used as the base resin of the resin composition of the sliding member.

As the PTFE resin on the market, D-210C or F-201 of POLYFLON (registered Trade Mark) manufactured by Daikin Industries, Ltd; AD911D of Fluon (registered Trade Mark) manufactured by Asahi Glass Co., Ltd; 31JR or 6C-J of Teflon (registered Trade Mark) manufactured by Chemours-Mitsui Fluoroproducts Co., Ltd and the like are exemplified.

### [Pitch-based Carbon Fiber]

The pitch-based carbon fiber (CF) is an essential additive to the resin composition 4 forming the sliding layer 5 for improving the value of the static fiction force and the rate of change in the dynamic friction force in relation to the static friction force. The pitch-based carbon fiber is used as a function-imparting agent and a reinforcing agent to the resin composition 4 forming the sliding layer 5 which contacts the mated member directly or via a fluid such as oil.

It is preferable that the resin composition 4 includes 0.5 weight % or more and 17 weight % or less of the pitch-based carbon fiber. It is also preferable that the pitch-based carbon fiber has 5 µm or more and 20 µm or less of a fiber diameter, 10 µm or more and 150 µm or less of a fiber length and 2 or more and 20 or less of an aspect ratio.

The pitch-based carbon fiber has high strength, high modulus, excellent abrasion resistance, a high specific frequency and an excellent vibration damping and absorbing performance. These characteristics of the pitch-based carbon fiber allows the static friction force to be increased and allows the rate of change in the dynamic friction force in relation to the static friction force to be reduced, by including a desired amount of the pitch-based carbon fiber in the resin composition 4. This enables the value of the static friction force and the rate of change in the dynamic friction force in relation to the static friction force to be improved, thereby improving sliding properties.

When the resin composition 4 includes less than 0.5 weight % of the pitch-based carbon fiber, the rate of change in the dynamic friction force in relation to the static friction force becomes large and self-abrasion quantity is also increased. When the resin composition 4 includes more than 17 weight % of the pitch-based carbon fiber, the static friction force is made excessive. This may block its dispersiveness and deteriorate impregnation into the porous layer. Further, when the pitch-based carbon fiber has more than 150 µm of a fiber length, the impregnation into the porous layer deteriorates and the pitch-based carbon fiber may be left out. It is to be noted that as the pitch-based carbon fiber on the market, DONACARBO manufactured by Osaka Gas Chemicals Co., Ltd., DIALEAD manufactured by Mitsubishi Chemical Corporation and the like are exemplified.

### [Aramid Fiber]

A predetermined amount of the aramid fiber may be added in the resin composition 4 for improving the value of the static fiction force and the rate of change in the dynamic friction force in relation to the static friction force to improve the sliding properties. It is preferable that more than 0 weight % and 14 weight % or less of the aramid fiber is contained when the aramid fiber is selected from the essential additives other than the pitch-based carbon fiber and is added to the resin composition 4.

By adding the predetermined amount of the aramid fiber to the resin composition 4, the resin composition 4 allows the abrasion resistance to be enhanced without hindering the value of the static friction force and the rate of change in the dynamic friction force in relation to the static friction force from being improved when the pitch-based carbon fiber is added, allows the value of the static friction force to be made large and allows the rate of change in the dynamic friction force in relation to the static friction force to be reduced.

Adding the aramid fiber hinders homogeneous dispersion when the additive amount of the aramid fiber exceeds 14 weight %, so that the abrasion resistance deteriorates. It is to be noted that as the aramid fiber on the market, Kevlar (registered trade mark) manufactured by DU PONT-TORAY CO., LTD., Twaron (registered trade mark) manufactured by TEIJIN LIMITED and the like are exemplified.

### [Iron Oxide]

It is preferable that more than 0 weight % and 37 weight % or less of the iron oxide (Fe02 or Fe2O3) is contained when the iron oxide is selected from the essential additives other than the pitch-based carbon fiber and is added to the resin composition 4.

By adding the predetermined amount of the iron oxide to the resin composition 4, the resin composition 4 allows the slidability to reduce without hindering the value of the static friction force and the rate of change in the dynamic friction force in relation to the static friction force from being improved when the pitch-based carbon fiber is added, allows the value of the static friction force to be made large and allows the rate of change in the dynamic friction force in relation to the static friction force to be reduced.

Adding the iron oxide deteriorates the impregnation in the impregnation step to the porous layer when the additive amount of the iron oxide exceeds 37 weight %. It is to be noted that as the iron oxide on the market, Bengara Color Series manufactured by MORISHITA BENGARA KOUGYO CO, . LTD. and the like are exemplified.

### [Molybdenum Disulfide]

It is preferable that more than 0 weight % and 20 weight % or less of the molybdenum disulfide (MoS2) is contained when the molybdenum disulfide is selected from the essential additives other than the pitch-based carbon fiber and is added to the resin composition 4.

By adding the predetermined amount of the molybdenum disulfide to the resin composition 4, the resin composition 4 allows the frictional resistance to reduce without hindering the value of the static friction force and the rate of change in the dynamic friction force in relation to the static friction force from being improved when the pitch-based carbon fiber is added.

Adding the molybdenum disulfide deteriorates the impregnation in the impregnation step to the porous layer when the additive amount of the molybdenum disulfide exceeds 20 weight %. It is to be noted that as the molybdenum disulfide on the market, H/GMoS2 manufactured by TAIYO KOKO Co., Ltd. , Molybdenum Disulfide Powder Series manufactured by DAIZO CORPORATION and the like are exemplified.

### [Graphite]

It is preferable that more than 0 weight % and 10 weight % or less of the graphite is contained when the graphite (C) is selected from the essential additives other than the pitch-based carbon fiber and is added to the resin composition 4.

By adding the predetermined amount of the graphite into the resin composition 4, the resin composition 4 allows the frictional resistance to reduce without hindering the value of the static friction force and the rate of change in the dynamic friction force in relation to the static friction force from being improved when the pitch-based carbon fiber is added.

Adding the graphite deteriorates the impregnation in the impregnation step to the porous layer when the additive amount of the graphite exceeds 10 weight %. It is to be noted that as the graphite on the market, GRAPHITE POWDER SERIES manufactured by Nippon Kokuen Group and the like are exemplified.

### [Zinc, Zinc Alloy or Zinc Compound]

It is preferable that more than 0 weight % and 40 weight % or less of the zinc (Zn), the zinc alloy or zinc compound is contained when the zinc, zinc alloy or zinc compound is selected from the essential additives other than the pitch-based carbon fiber and is added to the resin composition 4. It is also preferable that a diameter of the zinc, zinc alloy or zinc compound is 1 µm or more and 50 µm or less, more preferably, 1 µm or more and 25 µm or less, taking into consideration dispersiveness to fluorocarbon resin and a thickness of the resin layer including the resin composition.

The zinc alloy contains 3.5 weight % or more and 4.3 weight % or less of Al, 0. 75 weight % or more and 1.25 weight % or less of Cu, 0.020 weight % or more and 0.06 weight % or less of Mg, 0.10 weight % or less of Fe and the remainder of Zn and inevitable impurities, assuming weight of the zinc alloy as 100.

Alternatively, the zinc alloy contains 3.5 weight % or more and 4.3 weight % or less of Al, 0.25 weight % or less of Cu, 0.020 weight % or more and 0. 06 weight % or less of Mg, 0.10 weight % or less of Fe and the remainder of Zn and inevitable impurities, assuming weight of the zinc alloy as 100.

By adding the predetermined amount of the zinc, zinc alloy or zinc compound into the resin composition 4, the resin composition 4 allows the rate of change in the dynamic friction force in relation to the static friction force to reduce without hindering the value of the static friction force and the rate of change in the dynamic friction force in relation to the static friction force from being improved when the pitch-based carbon fiber is added.

Adding the zinc, zinc alloy or zinc compound deteriorates the impregnation in the impregnation step to the porous layer when the additive amount of the zinc, the zinc alloy or zinc compound exceeds 40 weight %, so that the abrasion resistance deteriorates.

The zinc compound is preferably ZnO, ZnS or ZnSO4.

### <Executed Examples>

The guide bushings were prepared using the sliding members having compositions of the Executed Examples 1 through 5 and the Comparison Examples 1 through 4, shown in Table 1, and their static friction force and their rates of change in the dynamic friction force in relation to the static friction force were measured.

### (1) Verification Method

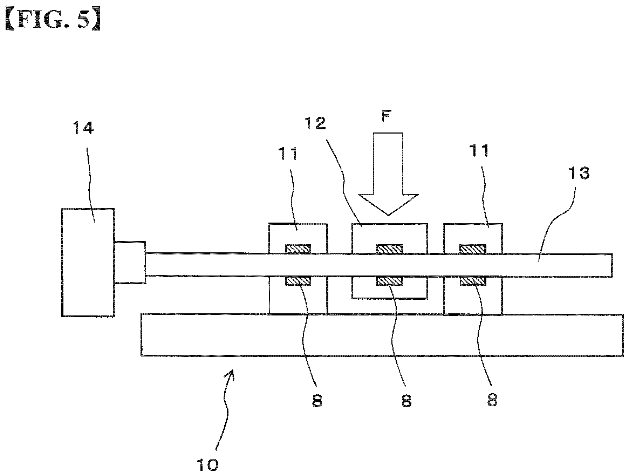

FIG. 5 shows a configuration example of a testing machine for measuring the static friction force and the dynamic friction force. In a testing machine 10, the guide bushings 8 to be tested were mounted in bearing bases 11 and a load portion 12. Any traverse loads were applied to the load portion 12 through the guide bushing 8 between the bearing bases 11 bearing the rod 13 through the guide bushings 8. Friction force when vibrating the rod 13, to which the traverse load had been applied, by a vibrator, not shown, was measured by a load cell 14.

In the Executed Examples 1 through 5, the pitch-based carbon fiber having 13 µm of a fiber diameter, 40 µm of an average fiber length and 3 of an aspect ratio was used. As the pitch-based carbon fiber of the Executed Examples 1 through 5, for example, DONACARBO S-2404N manufactured by Osaka Gas Chemicals Co., Ltd. was exemplified. In the Comparison Examples 3 and 4, the pitch-based carbon fibers which were same as these of the Executed Examples 1 through 5 were used.

### [Measurement Conditions]

The mated member was a rod made of carbon steel S45C, subjected to a hard chromium plating method and having 0.3 µm of a surface roughness Rz. The vibrator vibrated the rod 13 at 0.001 m/sec with 5 mm of a stroke. The traverse loads were 98N (10 kgf), 196N (20 kgf) and 294N (30 kgf) . The lubricating oil was oil for a shock absorber.

### (2)Determination Criteria

### (a) Static Friction Force Measurement:

In Table 1, a circle represents 40N or more and 80N or less of the static friction force when the load was 294N. A cross represents less than 40N or more than 80N of the static friction force when the load was 294N.

### (b) Measurement of Rate of Change in Dynamic Friction Force in relation to Static Friction Force:

A circle represents 20 % or less of the rate of change in the dynamic friction force in relation to the static friction force. A cross represents more than 20 % of the rate of change.

**[Table 1]**

| | EXECUTED EXAMPLE 1 | EXECUTED EXAMPLE 2 | EXECUTED EXAMPLE 3 | EXECUTED EXAMPLE 4 | EXECUTED EXAMPLE 5 | COMPARI -SON EXAMPLE 1 | COMPARI -SON EXAMPLE 2 | COMPARI -SON EXAMPLE 3 | COMPARI -SON EXAMPLE 4 |
|---|---|---|---|---|---|---|---|---|---|
| FLUOROCARBON RESIN (wt%) | BALANCE | BALANCE | BALANCE | BALANCE | BALANCE | 100 | BALANCE | BALANCE | BALANCE |
| PITCH-BASED CARBON FIBER (wt%) | 3.5 | 3.5 | 0.5 | 11 | 17 | - | - | 20 | 9 |
| ARAMID FIBER (wt%) | 1 .6 | 1 .7 | 3 | - | - | - | - | 15 | - |
| IRON OXIDE (wt%) | 20.2 | 20.6 | 25 | - | 7 | - | - | - | 35 |
| MOLYBDENUM DISULFIDE (wt%) | 3.7 | - | - | - | - | - | - | - | - |
| GRAPHITE (wt%) | - | 1.7 | - | - | - | - | - | - | |
| ZINC, ZINC ALLOY OR ZINC COMPOUND (wt%) | - | - | - | 14.2 | - | - | 6 | - | - |
| TOTAL ADDITION AMOUNT OF ADDITIVES EXCLUDING FLUOROCARBON RESIN (vol%) | 20 | 18.5 | 18.85 | 20 | 24.6 | 0 | 2 | 43.8 | 32.5 |
| STATIC FRICTION FORCE | ○ | ○ | ○ | ○ | ○ | × | × | × | × |
| RATE OF CHANGE | ○ | ○ | ○ | ○ | ○ | × | × | ○ | ○ |

As shown in Table 1, in each of the Executed Examples which used the pitch-based carbon fiber having 13 µm of a fiber diameter, 40 µm of an average fiber length and 3 of an aspect ratio, it has been understood that in the resin composition of the Executed Example 1 containing 3.5 weight % of the pitch-based carbon fiber, 1.6 weight % of the aramid fiber, 20.2 weight % of the iron oxide, 3.7 weight % of the molybdenum disulfide and the remaining of fluorocarbon resin (PTFE) wherein a total addition amount of additives excluding the fluorocarbon resin is 20 volume %, the static friction is made large to be a desired one and the rate of change in the dynamic friction force in relation to the static friction force reduces.

It has also been understood that in the resin composition of the Executed Example 2 containing 3. 5 weight % of the pitch-based carbon fiber, 1. 7 weight % of the aramid fiber, 20.6 weight % of the iron oxide, 1.7 weight % of the graphite and the remaining of fluorocarbon resin (PTFE) wherein a total addition amount of additives excluding the fluorocarbon resin is 18.5 volume %, the static friction is made large to be a desired one and the rate of change in the dynamic friction force in relation to the static friction force reduces.

It has further been understood that in the resin composition of the Executed Example 3 containing 0 . 5 weight % of the pitch-based carbon fiber, 3 weight % of the aramid fiber, 25 weight % of the iron oxide and the remaining of fluorocarbon resin (PTFE) wherein a total addition amount of additives excluding the fluorocarbon resin is 18.85 volume %, the static friction is made large to be a desired one and the rate of change in the dynamic friction force in relation to the static friction force reduces.

It has additionally been understood that in the resin composition of the Executed Example 4 containing 11 weight % of the pitch-based carbon fiber, 14.2 weight % of the zinc alloy and the remaining of fluorocarbon resin (PTFE) wherein a total addition amount of additives excluding the fluorocarbon resin is 20 volume %, the static friction is made large to be a desired one and the rate of change in the dynamic friction force in relation to the static friction force reduces. The zinc alloy having a composition suitably selected from the above-mentioned compositions can be used. In this Executed Example 4, Zn-3.89Al-0.05Cu-0.05Mg-0.01Fe was used.

It has still further been understood that in the resin composition of the Executed Example 5 containing 17 weight % of the pitch-based carbon fiber, 7 weight % of the iron oxide and the remaining of fluorocarbon resin (PTFE) wherein a total addition amount of additives excluding the fluorocarbon resin is 24.6 volume %, the static friction is made large to be a desired one and the rate of change in the dynamic friction force in relation to the static friction force reduces. In all of the Executed Examples 1 through 5, any self-abrasion of the sliding member and any abrasion of the mated member were controlled.

In contrast, it has been understood that in the resin composition of the Comparison Example 1 containing 100 weight % of the fluorocarbon resin, the static friction cannot be made large to be a desired one and the rate of change in the dynamic friction force in relation to the static friction force increases.

It has been understood that in the resin composition of the Comparison Example 2 containing none of the pitch-based carbon fiber, 6 weight % of the zinc alloy and the remaining of fluorocarbon resin wherein a total addition amount of additives excluding the fluorocarbon resin is 2 volume %, the static friction force cannot be made large to be a desired one and the rate of change in the dynamic friction force in relation to the static friction force increases.

It has also been understood that in the resin composition of the Comparison Example 3 containing 20 weight % of the pitch-based carbon fiber, 15 weight % of the aramid fiber and the remaining of fluorocarbon resin wherein a total addition amount of additives excluding the fluorocarbon resin is 43.8 volume %, the rate of change in the dynamic friction force in relation to the static friction force has a tendency to reduce but the static friction force is excessive.

It has further been understood that in the resin composition of the Comparison Example 4 containing 9 weight % of the pitch-based carbon fiber, 35 weight % of the iron oxide and the remaining of fluorocarbon resin wherein a total addition amount of additives excluding the fluorocarbon resin is 32.5 volume %, the rate of change in the dynamic friction force in relation to the static friction force has a tendency to reduce but the static friction force is excessive.

Accordingly, it has been understood that the value of the static friction cannot be a desired one when the total addition amount of additives excluding the fluorocarbon resin exceeds 25 volume %, even when including the pitch-based carbon fiber within a range of the invention and the resin composition includes any of or a combination of two or more of aramid fiber, iron oxide, molybdenum disulfide, graphite, and zinc, zinc alloy or zinc compound within a range of the invention.

In a case of polyacrylonitrile (PAN) -based carbon fiber, the rate of change in the dynamic friction force in relation to the static friction force had a tendency to reduce but the value of the static friction force could not be a desired one.

Accordingly, it has been understood that by including 0.5 weight % or more and 17 weight % or less of a pitch-based carbon fiber having 5 µm or more and 20 µm or less of a fiber diameter, 10 µm or more and 150 µm or less of a fiber length and 2 or more and 20 or less of an aspect ratio and including any of or a combination of two or more of aramid fiber, iron oxide, molybdenum disulfide, graphite, and zinc, zinc alloy or zinc compound within a range of the invention wherein a total addition amount of additives excluding the fluorocarbon resin is 25 volume %, the static friction is made large to be a desired one and the rate of change in the dynamic friction force in relation to the static friction force reduces.

As used in this specification and the appended claims, the singular forms "a", "an" and "the" include plural references unless the context clearly dictates otherwise. It should also be noted that the term "or" is generally employed in its sense including "and/or" unless the context clearly dictates otherwise. The Abstract of the Disclosure provided herein is for convenience only and does not interpret the scope or meaning of the implementations.

The terms and expressions which have been employed in the foregoing description are used therein as terms of description and not of limitation, and these are no intention, in the use of such terms and expressions, of excluding equivalent of the features shown and described or portions thereof, it being recognized that the scope of the invention is defined and limited only by the claims.

It is to be noted that any technical scope of the claims and/or meaning of term(s) claimed in the claims are not limited to the description in the above-mentioned embodiments. It should be understood by those skilled in the art that various modifications, combinations, sub-combinations and alterations may occur depending on design requirements and other factors insofar as they are within the scope of the appended claims or the equivalents thereof.

## Claims

1. A sliding member (1) **characterized in that** the sliding member (1) comprises:
a lead-free resin composition (4) wherein the lead-free resin composition (4) includes a pitch-based carbon fiber, a fluorocarbon resin and any of or a combination of two or more of aramid fiber, iron oxide, molybdenum disulfide, graphite, and zinc, zinc alloy or zinc compound,
wherein 0.5 weight % or more and 17 weight % or less of a pitch-based carbon fiber is included;
more than 0 weight % and 14 weight % or less of the aramid fiber is included when the aramid fiber is added;
more than 0 weight % and 37 weight % or less of the iron oxide is included when the iron oxide is added;
more than 0 weight % and 20 weight % or less of the molybdenum disulfide is included when the molybdenum disulfide is added;
more than 0 weight % and 10 weight % or less of the graphite is included when the graphite is added;
more than 0 weight % and 40 weight % or less of the zinc, zinc alloy or zinc compound is included when the zinc, zinc alloy or zinc compound is added, assuming weight of the resin composition as 100, and the remainder is the fluorocarbon resin, and
wherein a total addition amount of additives excluding the fluorocarbon resin is 25 volume % or less.

2. A sliding member (1) **characterized in that** the sliding member (1) comprises:
a metallic substrate (2);
a porous layer (3) formed on a surface of the metallic substrate (2) ; and
a sliding layer (5) covered on the porous layer (3),
wherein the porous layer (3) is made of a metal itself or alloy composition,
wherein the sliding layer (5) is made of a lead-free resin composition (4),
wherein the lead-free resin composition (4) includes a pitch-based carbon fiber, a fluorocarbon resin and any of or a combination of two or more of aramid fiber, iron oxide, molybdenum disulfide, graphite, and zinc, zinc alloy or zinc compound,
wherein 0.5 weight % or more and 17 weight % or less of a pitch-based carbon fiber is included;
more than 0 weight % and 14 weight % or less of the aramid fiber is included when the aramid fiber is added;
more than 0 weight % and 37 weight % or less of the iron oxide is included when the iron oxide is added;
more than 0 weight % and 20 weight % or less of the molybdenum disulfide is included when the molybdenum disulfide is added;
more than 0 weight % and 10 weight % or less of the graphite is included when the graphite is added;
more than 0 weight % and 40 weight % or less of the zinc, zinc alloy or zinc compound is included when the zinc, zinc alloy or zinc compound is added, assuming weight of the resin composition as 100, and the remainder is the fluorocarbon resin, and
wherein a total addition amount of additives excluding the fluorocarbon resin is 25 volume % or less.

3. The sliding member (1) according to the Claim 1 or 2 wherein the pitch-based carbon fiber includes 5 µm or more and 20 µm or less of a fiber diameter, 10 µm or more and 150 µm or less of a fiber length and 2 or more and 20 or less of an aspect ratio.

4. The sliding member (1) according to any one of the Claims 1 through 3 wherein the fluorocarbon resin is polytetrafluoroethylene.

5. A bearing (7) **characterized in that** the bearing (7) comprises:
a metallic substrate (2);
a porous layer (3) formed on a surface of the metallic substrate (2) ; and
a sliding layer (5) covered on the porous layer (3), the sliding layer being a cylindrical internal circumference and innermost layer,
wherein the porous layer (3) is made of a metal itself or alloy composition,
wherein the sliding layer (5) is made of a lead-free resin composition (4),
wherein the lead-free resin composition (4) includes a pitch-based carbon fiber, a fluorocarbon resin and any of or a combination of two or more of aramid fiber, iron oxide, molybdenum disulfide, graphite, and zinc, zinc alloy or zin compound,
wherein 0.5 weight % or more and 17 weight % or less of a pitch-based carbon fiber is included;
more than 0 weight % and 14 weight % or less of the aramid fiber is included when the aramid fiber is added;
more than 0 weight % and 37 weight % or less of the iron oxide is included when the iron oxide is added;
more than 0 weight % and 20 weight % or less of the molybdenum disulfide is included when the molybdenum disulfide is added;
more than 0 weight % and 10 weight % or less of the graphite is included when the graphite is added;
more than 0 weight % and 40 weight % or less of the zinc, zinc alloy or zinc compound is included when the zinc, zinc alloy or zinc compound is added, assuming weight of the resin composition as 100, and the remainder is the fluorocarbon resin, and
wherein a total addition amount of additives excluding the fluorocarbon resin is 25 volume % or less.
